Europäisches Patentamt

European Patent Office

Office européen des brevets

(19)

(11) Veröffentlichungsnummer: **0 269 639**
**B1**

(12) **EUROPÄISCHE PATENTSCHRIFT**

(45) Veröffentlichungstag der Patentschrift: **19.12.90**

(51) Int. Cl.⁵: **A 61 C 17/08**

(21) Anmeldenummer: **86906222.4**

(22) Anmeldetag: **24.10.86**

(86) Internationale Anmeldenummer:
**PCT/AT86/00068**

(87) Internationale Veröffentlichungsnummer:
**WO 87/02574 07.05.87 Gazette 87/10**

(54) **ABSAUGKANÜLE.**

(30) Priorität: **24.10.85 AT 3084/85**

(43) Veröffentlichungstag der Anmeldung:
**08.06.88 Patentblatt 88/23**

(45) Bekanntmachung des Hinweises auf die
Patenterteilung:
**19.12.90 Patentblatt 90/51**

(84) Benannte Vertragsstaaten:
**DE FR**

(56) Entgegenhaltungen:
**CH-A- 615 342**
**US-A-3 506 010**
**US-A-4 058 896**

(73) Patentinhaber: **Kotschy, Peter, Dr.**
**Lindengasse 41/15**
**A-1070 Wien (AT)**

(72) Erfinder: **Kotschy, Peter, Dr.**
**Lindengasse 41/15**
**A-1070 Wien (AT)**

(74) Vertreter: **Brauneiss, Leo**
**Patentanwälte Dipl.-Ing. Leo Brauneiss, Dipl.-**
**Ing. Dr. Helmut Wildhack Strohgasse 10**
**A-1030 Wien (AT)**

Courier Press, Leamington Spa, England.

EP 0 269 639 B1

**Beschreibung**

Die Erfindung bezieht sich auf eine Absaugkanüle, insbesondere für zahnärztliche Zwecke, mit einem an einen Absaugschlauch anschließbaren Rohr, das mit einer glatten, seitlich vorsprunglosen Verlängerung eines Umfangsteiles der Rohrwand einen eine Eintrittsöffnung für das abzusaugende Medium begrenzenden Vorsprung bildet, dessen Vorderrand bogenförmig verläuft, wobei die Ebene der mit abgeflachtem Querschnitt ausgebildeten Eintrittsöffnung normal zur Achsrichtung des Rohres oder geneigt dazu verläuft und wobei der Rand des Vorsprunges zumindest entlang des Vorderendes des Vorsprungs hochgewölbt und diese Hochwölbung abgerundet ist.

Absaugkanülen dienen auf zahlreichen medizinischen Gebieten zur Absaugung flüssigen, fester und gas- bzw. dampfförmiger Medien bzw. Mischungen davon, insbesondere in der zahnärztlichen Praxis zur Absaugung der Sprayflüssigkeit der Multifunktionsspritze, von Schleif- und Bohrstaub usw. Die zumeist in Verwendung befindlichen Absaugkanülen entsprechen aber in mehrfacher Hinsicht nicht den an die gestellten Anforderungen. Vor allem sind sie bie der Anwendung in der Zahnarztpraxis unangenehm im Mund des Patienten, da diese bekannten Konstruktionen seitlich von der Eintrittsöffnung für das abzuführende Medium wegstehende Lippen od.dgl. aufweisen (z.B. US—A—4 058 896), die an den empfindlichen Mundschleimhautteilen unangenehm empfunden werden, insbesondere wenn die Absaugkanüle dazu verwendet wird, die Wange, die Lippe oder andere Mundpartien von der eigentlichen Behandlungsstelle bzw. von der Turbine oder anderen Werkzeugen wegzudrücken. Weiters sind die bekannten Kanülen nicht genügend leistungsfähig hinsichtlich des Abtransportes des abzuführenden Mediums, welches zumeist ein Zweiphasensystem bildet, bestehend aus Luft une einem Flüssigkeitsfilm, gegebenenfalls versetzt mit Feststoffteilchen. Schließlich haben die bekannten Kanülen den Nachteil, daß sie im Betrieb ein störendes Geräusch verursachen, das einen großen Anteil an hohen Frequenzen hat, so daß dieses Geräusch vom Arzt bzw. der Assistentin lästig und häufig sogar schmerzvoll empfunden wird, insbesondere bei längerer Einwirkungsdauer.

Bei einer Absaugkanüle der eingangs geschilderten Art (z.B. US—A—3 506 010), welche für die Ansaugung der Wände des Uterus entwickelt wurde, ist die Verlängerung der Rohrwand hochgewölbt, so daß die Ebene der Eintrittsöffnung für das abzusaugende Medium schräg zur Achsrichtung des Rohres liegt, um die Ansaugung der Uterusschleimhaut an die Eintrittsöffnung zu begünstigen. Für zahnärtzliche Zwecke ist eine solche Kanüle aber nicht brauchbar, da beim Zahnarzt eine Ansaugung der Mundschleimhaut an die Ansaugöffnung vermieden werden muß, dann eine solche Ansaugung ist für den Patienten schmerzvoll. Wird eine solche bekannte Kanüle so gehalten, daß eine schmerzvolle Einwirkung auf den Patienten vermieden wird, dann wird die Absaugung des abzuführenden Mediums problematisch. Außerdem besteht immer noch des erwähnte störende Geräusch. Dies gilt auch für eine weitere bekannte zahntechnische Absaugkanüle (CH—A—615 342), bei welcher der Mündungsbereich des Rohres gekrümmt ist, so daß die Absaugöffnung mit ihrer Ebene etwa parallel zur Rohrachse liegt. Dies hat bei der zahnärztlichen Anwendung auch den Nachteil, daß die Eintrittsöffnung vergleichsweise hoch liegt, so daß die abzuführenden Teilchen nicht leicht in die Kanüle eingesaugt werden können.

Für Speichelsauger ist es auch bekannt, das Saugrohr zusätzlich zur Stirnöffnung mit seitlichen Öffnungen für die Speichelflüssigkeit zu versehen und das ursprünglich ungebogene Rohr anschließend um etwa 180° wieder auf sich zurückzubiegen. Auch hiebei entstehen jedoch die zuvor beschriebenen Nachteile.

Die Erfindung setzt sich zur Aufgabe, eine Absaugkanüle der eingangs erwähnten Art so zu verbessern, daß die geschilderten Nachteile vermieden sind und die Kanüle leise, leistungsfähig, angenehm im Mud und handlich zu bedienen ist. Die Erfindung löst diese Aufgabe in überraschender Weise dadurch, daß der vor der Eintrittsöffnung vorstehende Vorsprung einen in Achsrichtung des Rohres verlaufenden flachen Boden aufweist. Während bei der eingangs beschriebenen Kanüle für die Uterusbehandlung die Verlängerung der Rohrwand die Eintrittsöffnung zwar begrenzt, aber hinter dieser liegt, liegt beim Erfindungsgegenstand diese Verlängerung bzw. der von ihr gebildete Vorsprung vor der Eintrittsöffnung. Der hochgewölbte Rand dieses Vorsprunges bildet diesen nach Art eines flachen Löffels bzw. einer flachen Schüssel bzw. Schale aus, was in überraschender Weise eine Reihe von Vorteilen mit sich bringt. Zunächst wird aber der abgerundete Vorsprung nicht mehr unangenehm im Mund empfunden, auch dann nicht, wenn dieser Vorsprung der Kanüle bzw. sein flacher Boden zum Wegdrücken von Mundpartien bzw. in tiefen Winkeln der Mundhöhle verwendet wird, denn die Saugwirkung beginnt erst an der Eintrittsöffnung und ist im Bereich des abgerundeten Vorderrandes des Vorsprunges praktisch nicht vorhanden. Die erwähnte Schüsselform des vorderen Vorsprungrandes bringt aber auch hinsichtlich des Transportes des abzuführenden Materiales Vorteile, welches non von selbst seitlich in die von diesem Vorderrand begrenzte konkave Höhlung hineinfällt, ohne daß der Eintritt der abzusaugenden Substanzen in diese Höhlung behindert wird, wie dies bei der Ausbildung nach der vorhin erwähnten CH—A—615 342 der Fall ist. Schließblich ergibt sich in überraschender Weise eine Geräuschdämpfung, auch gegenüber der zuvor erwähnten, aus der CH—A—615 342 bekannten Konstruktion. Dies mag damit zusammenhängen, daß dort die Eintrittsöffnung mit ihrer Ebene etwa parallel zur Rohrachse liegt, wogegen beim Erfindungsgegenstand die Ebene der Eintrittsöffnung normal zur Rohrachse oder dazu etwas geneigt verläuft. Es treten daher beim Erfindungsgegenstand andere Strömungsverhältnisse für die angesaugte Luftkomponente auf als bei der bekannten Konstruktion, wozu auch die Abflachung des Querschnittes der Eintrittsöffnung wesentlich beiträgt. Es hat sich gezeigt, daß diese Abflachung für die erwähnte Geräuschdämpfung wesentlich ist. Außerdem erleichtert diese Abflachung die Ausbildung des flachen bzw. ebenen Bodens des vor der Eintrittsöffnung liegenden löffelartigen Vorsprunges.

Die beschriebenen Vorteil treten dann besonders merkbar auf, wenn gemäß einer bevorzugten Ausführungsform der Erfindung die Hochwölbung entlang des gesamten Randes des Vorsprunges bis zur Eintrittsöffnung verläuft. Auf diese Weise bildet der Vorsprung eine napfartige, von der abgerundeten Hochwölbung begrenzte Vertiefung, die in Fortsetzung des Hohlraumes des Kanülenrohres liegt. Hiebei ist es besonders günstig, wenn gemäß einer Weiterbildung der Erfindung die Hochwölbung an den beiden Seitenrändern des Vorsprunges in eine über der Eintrittsöffnung leigende Verdickung der Rohrwand übergeht. Überraschender Weise ergibt sich durch diese Verdickung eine weitere Dämpfung des Funktionsgeräusches, insbesondere im Bereich der strörenden hohen Frequenzanteile. Erfindungsgemäß ist es besonders günstig, diese Verdickung mit einem Tragflügelprofil auszubilden, welches gegen die Eintrittsöffnung zu gerichtet ist. Es kann angenommen werden, daß dadurch eine Wirbelbildung im Bereich der Eintrittsöffnung vermieden wird und auf diese Weise die Geräuschdämpfung bewirkt wird.

Die Höhe der Hochwölbung des löffelartigen Vorsprunges richtet sich nach dem Anwendungsgebiet, jedoch ist es in vielen Fällen günstig, wenn diese Hochwölbung zumindest bis zur halben Höhe der Eintrittsöffnung nach oben reicht.

Die Abrundung der Hochwölbung kann dadurch besonders wirksam und hautfreundlich ausgebildet werden, daß die Hochwölbung am freien Ende ihres Querschnittes einen abgerundeten Wulst hat.

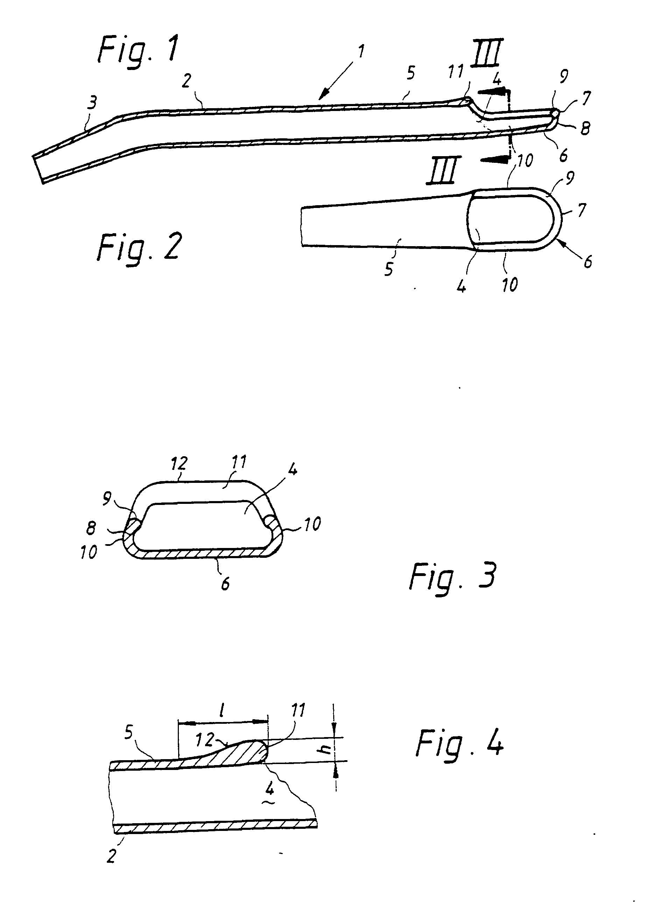

In der Zeichnung ist der Erfindungsgegenstand an Hand eines Ausführungsbeispieles für zahnärztliche Zwecke schematisch dargestellt. Fig. 1 zeigt einen Axialschnitt durch die Absaugkanüle. Fig. 2 ist eine Draufsicht auf den Vorderteil der Kanüle. Fig. 3 ist ein Schnitt nach der Linie III—III der Fig. 1 in größerem Maßstab und Fig. 4 zeigt, nochmals in vergrößertem Maßstab, das tragflügelprofilartige Profil der Verdickung am Oberrand der Eintrittsöffnung.

Die Absaugkanüle 1 hat ein Rohr 2 aus Kunststoff oder Metall, das in seinem hinteren Bereich 3 aus Gründen der besseren Handlichkeit abgewinkelt und zum Anschluß an einen Absaugschlauch ausgebildet ist. Zwecks Erleichterung des Anschlusses an ein Ansatzstück kann der hintere Bereich 3 der Kanüle 1 konisch ausgebildet sein. Der vordere, zur Eintrittsöffnung 4 für die abzusaugenden Substanzen führende Bereich 5 des Rohres 2 ist mit einem über die Eintrittsöffnung 4 in Achsrichtung des Rohres 2 hinausragenden Vorsprung 6 versehen, der löffelartig ausgebildet ist. Dieser Vorsprung 6 ist von glatten, im Wesentlichen in Rohrachsrichtung vorstehenden, seitlich vorsprunglosen Verlängerungen jener Umfangsteile des Rohres 2 gebildet, welche den Boden und die beiden Seitenteile des Rohrquerschnittes begrenzen. Diese Wandteile gehen glatt in den Bereich 5 des Rohres 2 über, jedoch ist das Rohr 2 gegen die Eintrittsöffnung 4 zu etwas abgeflächt, so daß der im Bereich 3 und im hinteren Teil des Bereiches 5 kreisförmige Rohrquerschnitt gegen die Eintrittsöffnung 4 zu und insbesondere an dieser die Form eines abgeflachten Ovales hat (Fig. 3). Zur Bildung der erwähnten Löffelform des Vorsprunges 6 mit im wesentlichen flachen, gegebenenfalls sogar ebenen Boden, ist sein Vorderrand 7 mit einer Hochwölbung 8 versehen, die an ihrem freien Ende mit einem abgerundeten Wulst 9 ausgestattet ist. Diese Hochwölbung 8 bildet eine Krümmung des Vorderrandes des Bodens des Vorsprunges 6, setzt jedoch erst bei diesem Vorderrand an und liegt somit von der Eintrittsöffnung 4 in einem in Achsrichtung des Rohres 2 gemessenen Abstand. Die abgerundete Hochwölbung 8 verläuft entlang des Vorderrandes 7 und der beiden Seitenränder 10 des Vorsprunges 6, welcher auf diese Weise lippenartig aufgewölbt und allseits abgerundet ist. Diese Aufwölbung geht glatt in die Seitenwände und in die Bodenwand des Rohrbereiches 5 über. Im Bereich der Eintrittsöffnung 4 geht der Wulst 9 in eine Verdickung 11 der oberhalb der Eintrittsöffnung 4 liegende rohrwand über. Diese Verdickung 11 hat, wie Fig. 4 zeigt, zweckmäßig das Profil eines Tragflügels, wobei die abgerundete Vorderseite dieses Profiles der Eintrittsöffnung 4 zugewendet ist. Die Deckfläche 12 dieser Verdickung 11 verläuft daher gegen den Rohrbereich 3 zu abfallend. Zweckmäßig ist das Verhältnis der Gesamthöhe h der Verdickung 11 zur Gesamthöhe 1 derselben etwa wie 1:4 bis 1:5.

Die hochgezogenen Seitenränder und der hochgebogene Vorderrand 7 des Vorsprunges 6 reichen nach oben über die halbe Höhe der Eintrittsöffnung 4 hinaus.

Der abgerundete Wulst 9 kann bei einer aus Metall bestehenden Kanüle 1 leicht dadurch erzeugt werden, daß ein Draht mit Rundquerschnitt auf den oberen Rand der hochgebogenen Rohrwände aufgelötet wird, wobei der Durchmesser dieses Drahtes größer ist als die Materialstärke der Rohrwand.

Der Vorderrand 7 des Vorsprunges 6 verläuft zweckmäßig entlang eines Kreisbogens. Der gesamte Vorsprung 6 ist länglich ausgebildet, wobei die Längserstreckung in Richtung der Rohrachse liegt.

**Patentansprüche**

1. Absaugkanüle, insbesondere für zahnärztliche Zwecke, mit einem an einen Absaugschlauch anschließbaren Rohr (2), das mit einer glatten seitlich vorsprunglosen Verlängerung eines Umfangsteiles der Rohrwand einen eine Eintritts-söffnung (4) für das abzusaugende Medium begrenzenden Vorsprung (6) bildet, dessen Vorderrand bogenförmig verläuft, wobei die Ebene der mit abgeflachtem Querschnitt ausgebildeten Eintrittsöffnung (4) normal zur Achsrichtung des Rohres (2) oder geneigt dazu verläuft, und wobei der Rand des Vorsprunges (6) zumindest entlang des Vorderendes des Vorsprunges (6) hochgewölbt und diese Hochwölbung (8) abgerundet ist dadurch gekennzeichnet, daß der vor der Eintrittsöffnung (4) vorstehende Vorsprung (6) einen in Achsrictung des Rohres verlaufenden flachen Boden aufweist.

2. Absaugkanüle nach Anspruch 1, dadurch gekennzeichnet, daß die Hochwölbung (8) entlang des gesamten Randes des Vorsprunges (6) bis zur Eintrittsöffnung (4) verläuft.

3. Absaugkanüle nach Anspruch 1 oder 2, dadurch gekennzeichnet, daß die Hochwölbung (8) an den beiden Seitenrändern (10) des Vorsprunges (6) in eine über der Eintrittsöffnung (4) liegende Verdickung (11) der Rohrwand übergeht.

4. Absaugkanüle nach Anspruch 3, dadurch gekennzeichnet, daß die Verdickung (11) mit gegen die Eintrittsöffnung (4) zu gerichtetem Tragflügelprofilquerschnitt ausgebildet ist.

5. Absaugkanüle nach einem der Ansprüche 1 bis 4, dadurch gekennzeichnet, daß die Hochwölbung (8) zumindest bis zu halben Höhe der Eintrittsöffnung (4) nach oben reicht.

6. Absaugkanüle nach einem der Ansprüche 1 bis 5, dadurch gekennzeichnet, daß die Hochwölbung (8) am freien Ende ihres Querschnittes einen abgerundeten Wulst (9) hat.

7. Absaugkanüle nach einem der Ansprüche 1 bis 6, dadurch gekennzeichnet, daß der Boden des Vorsprunges (6) eben ist.

8. Absaugkanüle nach einem der Ansprüche 1 bis 7, dadurch gekennzeichnet, daß der Vorsprung (6) länglich mit in Richtung der Rohrachse liegender Längserstreckung ist.

**Revendications**

1. Canule d'aspiration, en particulier pour des buts dentaires, pourvue d'un tuyau (2) raccordable à un tube d'aspiration, le tuyau formant avec une prolongation lisse libre de projections latérales d'une partie circonférentielle de la paroi du tuyau une saillie (6) pourvue d'un bord antérieur arqué définissant un orifice d'entrée (4) pour le milieu à aspirer, le plan de l'orifice d'entrée (4) formé avec section droite aplatie s'étendant normalement ou incliné par rapport à la dirction de l'axe du tuyau (2) et le bord de la saillie (6) étant fortement voûté au moins lelong de l'extrémité anérieure de la saillie (6) et ladite haute voûte étant arrondie, caractérisée en ce que la saillie (6) projettant devant l'orifice d'entrée (4) est pourvue d'un fond plat s'étendant dans la direction de l'axe du tuyau.

2. Canule d'aspiration selon la revendication 1, caractériséee en ce que la haute voûte (8) s'étend lelong du bord entier de la saillie (6) jusqu'à l'orifice d'entrée (4).

3. Canule d'aspiration selon la revendication 1 ou 2, caractérisé en ce que la haute voûte (8) passe aux deux bords latéraux (10) de la saillie (6) à un épaissement (11) de la paroi du tuyau situé en haut de l'orifice d'entrée (4).

4. Canule d'aspiration selon la revendication 3, caractérisée en ce que l'épaissement (11) est formée avec une section droite en forme d'un profile d'ailes protantes dirigée vers l'orifice d'entrée (4).

5. Canule d'aspiration selon une des revendications 1 à 4, caractérisée en ce que la haute voûte (8) s'étend en haut au moins jusqu'à la moitié de l'hauteur de l'orifice d'entrée (4).

6. Canule d'aspiration selon une des revendications 1 à 5, caractérisée en ce que la haute voûte (8) est pourvue d'un bourrelet arrondi (9) à l'extrémité libre de sa section droite.

7. Canule d'aspiration selon une des revendications 1 à 6, caractérisée en ce que le fond de la saillie (6) est plat.

8. Canule d'aspiration selon une des revendications 1 à 7, caractérisée en ce que la saillie (6) est oblongue et d'une étendue longitudinale située dans la direction de l'axe du tuyau.

**Claims**

1. Suction cannula, in particular for dental purposes, with a pipe (2) connectable to a suction tube, the pipe (2) forming a projection (6) having an arcuate front edge defining an inlet opening (4) for the medium to be discharged together with a smooth extension of a circumferential portion of the pipe wall free of lateral projections, the plane of the inlet opening (4) formed with flattened cross section extending normally or obliquely to the axial direction of the pipe (2) and the edge of the projection (6) being highly cambered and this high camber (8) being rounded, characterized in that the projection (6) protruding in front of the inlet opening (4) has a flat bottom extending in the direction of the pipe axis.

2. Suction cannula according to claim 1, wherein the high camber (8) extends along the entire edge of the projection (6) up to the inlet opening (4).

3. Suction cannula according to claim 1 or 2, wherein the high camber terminates in a thickening (11) of the pipe wall located above the inlet opening (4) on the two side edges (10) of the projection (6).

4. Suction cannula according to claim 3, wherein the thickening (11) is formed with airfoil profile cross section directed towards the inlet opening (4).

5. Suction cannula according to any one of the claims 1 to 4, wherein the high camber (8) reaches up to at least half the height of the inlet opening (4).

6. Suction cannula according to any one of the claims 1 to 5, wherein the high camber (8) is provided with a rounded bead (9) on the free end of its cross section.

7. Suction cannula according to any one of the claims 1 to 6, wherein the bottom of the projection (6) is flat.

8. Suction cannula according to any one of the claims 1 to 7, wherein the projection (6) is oblong with its longitudinal extension positioned in the direction of the pipe axis.

Fig. 1

Fig. 2

Fig. 3

Fig. 4